# EUROPEAN PATENT APPLICATION

(11) **EP 1 604 866 A2**
(43) Date of publication of application: **14.12.2005**
(21) Application number: 05076315.0
(22) Date of filing: 06.06.2005
(51) Int. Cl.: B60Q 1/44

(54) **Device in a vehicle for triggering a warning signal during braking**

(30) Priority: 07.06.2004 NL 1026345
(71) Applicant: Woltering, Ben J.M., 5916 RD Venlo (NL)
(72) Inventor: Woltering, Ben J.M., 5916 RD Venlo (NL)
(74) Representative: Bleukx, Lucas Lodewijk M.

(57) **Abstract**

Device in a vehicle such as a car for triggering a warning signal during breaking, said device comprising a deceleration sensor (2), which as of predetermined deceleration triggers a signal, a pulse generator (6) which in dependence on the signal from the deceleration sensor generates a pulsating signal for the pulsating switching on and off of warning lights (7) on the vehicle, whereby between the deceleration sensor (2) and the pulse generator (6) a switch element (3) is arranged which maintains the connection between the deceleration sensor (2) and the pulse generator (6) for at least a period of time after the brake pedal (4) of the vehicle is operated.

## Description

The invention relates to a device in a vehicle, such as a car, for triggering a warning signal during braking, said device comprising a deceleration sensor which as of a certain deceleration triggers a signal, and a pulse generator which in dependence on the signal from the deceleration sensor generates a pulsating signal for the pulsating switching on and off of warning lights on the vehicle.

Such a device is known from European patent specification 0 889 802. This describes a device in which the deceleration sensor can operate the direction indicators on reaching a predetermined deceleration, but in which an additional signal light is present as a supplementary warning. As a result of this integration into the normal electrical system of the vehicle the design is relatively complicated.

The aim of the invention is to create a device of type set out above which is particularly suitable for subsequent incorporation into an already existing vehicle.

This is achieved in accordance with the invention in that a switching element is arranged between the deceleration sensor and the pulse generator which maintains the connection between the deceleration sensor and the pulse generator at least during the period after the brake pedal of the vehicle has been operated

This means that the device can be simply built in as a separate unit with only one electrical connection with the braking system and the warning lights to be operated being necessary.

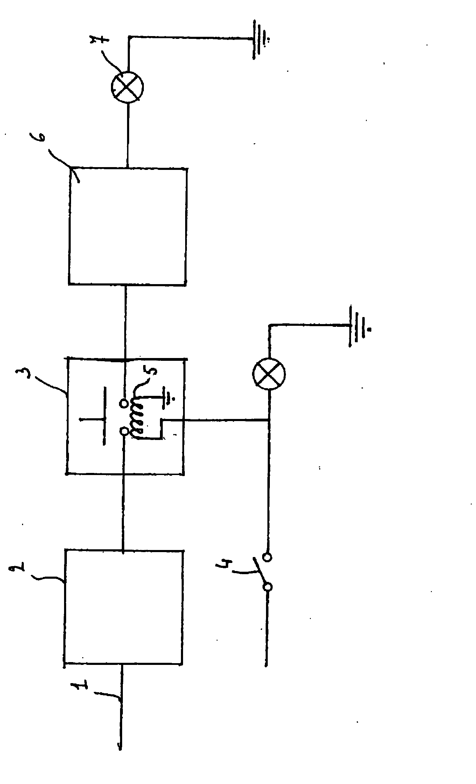

Other characteristics and advantages will become clear from the following description in which reference is made to the attached drawing in which a circuit diagram of the device according to the invention is shown. As schematically shown in the figure, the device according to the invention comprises a connection 1 with an electrical supply. This electrical supply can be from the normally present vehicle battery, but can also be a completely independent source of current in the form of batteries etc.

The supply is connected to a deceleration sensor 2 which at a predetermined deceleration closes a switch. The deceleration sensor can be of any known type, for example as described in German utility model 29 911 344.

In a preferred form of embodiment a spiral spring is used which at one end is connected to a magnetic mass. During braking this magnetic mass will move and can thus be displaced in such a way that a magnetically operated switch, for example a Reed switch, can be operated. The advantage of such a design is that it can be fully included in an integrated switching system.

The deceleration sensor is connected to a switch 3 which is closed when the brake pedal 4 of the vehicle is operated. For this the signal that normally supplies the brake light can be used, for example, to power a relay switch 5 by way of which the switch 3 is closed.

The relay switch 5 can be designed in such a way that after operating the switch 4 the switch 3 may be closed after some delay and/or that after releasing the brake pedal the switch 3 is still kept closed for some time so that the switch 3 is opened again after some delay.

By closing the switch 3 a pulse generator is powered at the outlet of which pulses of a determined frequency are generated. This outlet of the pulse generator 6 is in turn connected to a warning light 7. The warning light 7 can be the normal winker or indicator lights of the vehicle, but in certain circumstances additional warning lights can also be used.
For this the brake lights, reverse lights or fog lights could also possibly be used.

The device as described above is particularly suitable as a build-in set for subsequent installation in a vehicle. This can be done relatively simply at the rear of the vehicle where it can be relatively easily connected to the brake light installation and indicator lights.

In this way a vehicle can be subsequently fitted with a system that can be described as a Deceleration Alert System (= DAS).

In practice it is possible to operate a number of warning light systems. Thus, with the device according to the invention it is possible to switch the indicator lights on and off in a pulsating manner as above, either immediately after braking hard, or with some delay, or on reaching a determined minimum vehicle speed, in which case a speed detector has to be built in.
In addition, powering of the indicator lights can be stopped immediately after discontinuing braking or with some delay.

It is also possible to let the both the brake lights and indicator lights continue to flash after the switch 4 has been closed and the deceleration switch has been activated. This could take place with two different frequencies, and, if necessary, with a different time delay, both when switching on and off, whereby the minimum speed can still play a part.

One and another can mean that certain components of the switch must be doubled; such as the relay switch 3 and the pulse generator 6.

## Claims

1. Device in a vehicle such as a car for triggering a warning signal during braking, said device comprising a deceleration sensor which as of predetermined deceleration triggers a signal, a pulse generator which in dependence on the signal from the deceleration sensor generates a pulsating signal for the pulsating switching on and off of warning lights on the vehicle, **characterised in that** between the deceleration sensor and the pulse generator a switch element is arranged which maintains the connection between the deceleration sensor and the pulse generator for at least a period of time after the brake pedal of the vehicle is operated.

2. Device according to claim 1, characterise in that after releasing the brake pedal the switching element maintains the connection between the deceleration sensor and the pulse generator for a predetermined period of time.

3. Device according to any one of claims 1 or 2, **characterised in that** the frequency of the pulse generator differs from the normal frequency of the direction indicators of the vehicle.

4. Device according to any one of claims 1 - 3, **characterised in that** the device can be installed in the vehicle as a build-in set.
